# EUROPEAN PATENT APPLICATION

(11) **EP 4 390 215 A1**
(43) Date of publication of application: **26.06.2024**
(21) Application number: 22214513.8
(22) Date of filing: 19.12.2022
(51) Int. Cl.: F21S 43/14, F21S 43/15, F21S 43/239, F21S 43/243, F21S 43/245, F21S 43/249, F21S 43/27, B60Q 1/00, F21W 104/00, F21V 8/00, F21W 103/55

(54) **A SIGNALING AND/OR LIGHTING DEVICE FOR A MOTOR VEHICLE**

(71) Applicant: Valeo Vision, 93012 Bobigny Cedex (FR)
(72) Inventor: RUAT, Olivier, 49000 ANGERS (FR)
(74) Representative: Valeo Visibility

(57) **Abstract**

The present invention pertains to an indicating and/or lighting device 100 for a motor vehicle. The device 100 comprises a lighting module 102 having a main light source 104 and emitting a main light beam in a main direction. The device 100 comprises a front light guide 106 that is a flat light guide comprising two main surfaces 120 separated by edges 122. The front light guide 106 and its main surfaces 120 being arranged in front of the lighting module 102 and transversally to the main direction. At least one of the said main surfaces 120 comprises smooth surfaces portions 206 and irregular portions 208 covered by plurality of roughnesses with at least one pattern. Further, the device 100 comprises at least one side light guide 108 arranged at a side of the lighting module 102 including top and bottom. The side light guide 108 is arranged such that the light transmitted from the side light guide 108 is different from the light transmitted from the front light guide 106.

## Description

### TECHNICAL FIELD

The present invention relates to a luminous device for a motor vehicle, and more particularly to an indicating and/or lighting device to provide both signaling and lighting function.

### STATE OF THE ART

Luminous devices are used in automotive vehicles for performing various functions such as illuminating road, illuminating interior of a vehicle, providing signal to other drivers on the road and the like. To perform various functions, the automotive vehicle may utilize different types of luminous devices such as headlamps, tail lamps, and the like that are attached on front side, rear, and interior of the automotive vehicle. Conventionally, each type of luminous devices may perform one function such as for example the headlamp may illuminate the road and a rear lamp or a signal lamp may perform signaling function such as providing distance communication to other vehicles by indicating presence and direction changes of the vehicle. Usually the automotive vehicle may have the headlamp and the signal lamp independently disposed on front side to illuminate the road and to provide signaling respectively.

Recent advancements in automotive lighting technology has led to introduction of combination lighting wherein one or more light sources are combined to perform multiple lighting functions. For example, rear combination lamps may be a combination of tail lights, brake lights, fog lights, direction indicator and reversing light. Similar solutions can be adapted for front lighting as well. Further, the luminous devices are regulated by various statutory requirements. For example, the headlamp may be required to have certain surface area, emit certain intensity of light, ensure signaling light and headlight are clearly distinguishable, and the like. When multiple lighting functions are combined, it becomes increasingly complex to meet the statutory requirements. For example, when one or more indicating or signaling functions are combined with lighting function in the headlamp, it becomes difficult to ensure the signaling light and the main light from the headlamp are clearly distinguishable. Further, intensity and direction of the light emitted from the headlamp should be able to meet statutory requirements.

Usually, outer lens of the headlamp is modified to ensure light rays emitted from the headlamp are in a desired direction. Particularly, inner surface of the outer lens is modified to be neutralized, which means that it is modified such that the direction of the light rays when going through the outer lens is not impacted by the refraction. For example, the inner surface can be modified such that the light rays that undergo refraction when entering the outer lens and when going out of the outer lens go out of the outer lens in a direction that is parallel to their direction before entering the outer lens. In any case, the signal light is kept away from main light of the headlamp. Moreover, the signal light and the main light are kept as a separate module. Further, the inner surface of the outer lens of the headlamp may need to be designed each time for different variants of the automotive vehicle which increases complexity and manufacturing costs. In addition, because the signaling is kept as a separate unit away from the main light, the space and weight of the headlamp is increased and becomes bulky.

The prior art and the conventional methods have various disadvantages as described above and there is a need for a luminous device that can overcome the disadvantages of the conventional method.

### SUMMARY OF THE INVENTION

An object of the present invention is to solve the disadvantages described above of known lighting devices.

The present invention relates to an indicating and/or lighting device for a motor vehicle. The indicating and/or lighting device comprises a lighting module having a main light source and emitting a main light beam in a main direction. The indicating and/or lighting device comprises a front light guide that is a flat light guide comprising two main surfaces separated by edges, the light guide and its main surfaces being arranged in front of the lighting module and transversally to the main direction. The front light guide is substantially made of a transparent material and wherein at least one of the said main surfaces comprises smooth surfaces portions and irregular portions covered by plurality of roughnesses with at least one pattern, the portions being arranged in such a way that the main beam goes at least partly out of said device through said main surfaces in such a way that it forms a lighting or a signalling function. The indicating and/or lighting device comprises at least one side light guide is provided and arranged at a side of the lighting module including top and bottom, the side light guide is arranged such that the light transmitted from the side light guide is different from the light transmitted from the front light guide.

Providing the at least one side light guide may prevent mixing of signal light with main light beam thereby providing a clear distinction between lighting and indicating or signaling function. In addition, providing the front light guide and the side light guide before the main light source enables integration of lighting and signaling function in a single vehicle lighting apparatus. Further, the front light guide enables the vehicle lighting apparatus to provide signature lighting function in addition to the signaling and lighting function. In addition, the lighting and/or signaling module can be used in different variants of the automotive vehicle as a plug and play or standalone device without the need to modify the inner surface of the outer lens for each variant because the side light guide, the front light guide and the main light source are integrated within a single lighting module. Therefore, integration of the lighting function and the signaling function enables standardizing the vehicle lighting apparatus.

The present invention can incorporate one or several combined embodiments presented hereafter. However, these embodiments are optional.

In an embodiment of the present invention, the front light guide comprises a light incoupling portion. The lighting and/or signalling device comprising a first auxiliary light source, said front light guide and said first auxiliary light source being arranged such that the light emitted by said first auxiliary light source enters into the front light guide through the incoupling portion and propagates along the front light guide by total internal reflexions until it contacts one of the roughnesses and consequently exit out of the front light guide. The first auxiliary light source is disposed on a first Printed Circuit Board (PCB) attached on top of the front light guide.

In this embodiment, the front light guide may not only perform function of a transparent screen when the light is emitted from the main light source, but also it may perform total internal reflection of the light emitted from the first auxiliary light source, so that the signal function is also generated by the light initially coming from the auxiliary light source and being uncoupled by the roughnesses.

For example, the first auxiliary light source can be turned-ON and the main light source can be turned-OFF, or the first auxiliary light source can be turned-OFF and the main light source can be turned-ON.

For example, the auxiliary light source can be used to generate a DRL function. This enables the DRL to be produced at the output of the same surface as the main lighting function, which is here the outer surface of the front light guide.

In an embodiment of the present invention, the side light guide is a flat light guide comprising a light incoupling portion, and an irregular light output portion covered by plurality of roughness, said device comprising a second auxiliary light source, said side light guide and said second auxiliary light source being arranged such that the light emitted by said second auxiliary light source enters into the side light guide through the incoupling portion and propagates along the side light guide by total internal reflections until it contacts one of the roughnesses and consequently exit out of the side light guide.

The side light guide ensures that the indicating function may be performed simultaneously with the lighting function. Further, there is no requirement for a separate signal light for the automotive vehicle.

It is also possible in an embodiment that both first and second auxiliary light sources be simultaneously lit on, in order to provide the same signal function. In a corresponding variant, the front and the side light guide can be arranged such that the photometry grid of the signaling function is mainly fulfilled with the side light guide and second auxiliary light sources and the requirements of the size of the lit on surface is fulfilled by both front light guide and the side light guide.

In an embodiment of the present invention, the device comprises a container containing the lighting module, the front light guide forming a front wall of the container. The device is thus arranged as a compact module, which can then be easily manipulated and assembled in a headlamp.

In an embodiment of the present invention, the container comprises a housing, wherein the housing includes a top cap and a bottom cap, forming respectively a top wall and a bottom wall of the container.

In an embodiment of the present invention, the front light guide is adapted to be attached vertically to a recess at the bottom cap.

In an embodiment of the present invention, the side light guide form a side wall of the container. This provides an even more integrated device as both a lighting and signaling module. Notably, it will ease manipulation and assembly in a headlamp.

In an embodiment of the present invention, the lighting module further comprises a heat sink at a posterior end of the lighting module, said heatsink rising out of the container and at the rear of the container.

In an embodiment of the present invention, the smooth surfaces portions and the irregular portions forms respectively transparent stripes and translucent stripes, said portions being arranged on the front light guide as an alternance of transparent stripes and translucent stripes.

In an embodiment of the present invention, the side light guide is arranged such that its light emitting edge has the same shape as the closest of said translucent portions. This provides the module with a consistant lighten signal aspect, notably with an embodiment wherein both first and second auxiliary light sources are lit on.

In an embodiment of the present invention, the front light guide and the side light guide are positioned such that the light transmitted from the front light guide does not mix with the light transmitted from the side light guide.

Another object of the present invention relates to a vehicle lighting apparatus, such as a headlamp, a front lighting bar, a rear lamp, comprising a housing closed by an outer lens, said outer lens designed to be a part of the exterior surface of a vehicle, said housing including a device according to the invention. The said device and said outer lens being arranged such that the light it emits goes out of the said apparatus through said outer lens and said patterns are visible through said outer lens. In this case, it will ease the design of the outerlens and more particularly the process to have it neutralized, as the roughness are not beared by the outer lens but by the front light guide.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Figure 1 shows an exploded view of the indicating and/or lighting device, according to an embodiment of the present invention.
Figure 2a shows path of light rays in the front light guide with smooth surface portion, according to an embodiment of the present invention.
Figure 2b shows path of light rays in the front light guide with irregular portion, according to an embodiment of the present invention.
Fig. 2c shows an arrangement of smooth surface portion and irregular portion on the front light guide, according to an embodiment of the present invention.
Figure 3a shows a schematic top view of the side light guide, according to an embodiment of the present invention.
Figure 3b shows a schematic side view of the side light guide, according to an embodiment of the present invention.
Figure 4 shows the indicating and/or lighting device fixed on an automotive vehicle, according to an embodiment of the present invention.

### DETAILED DESCRIPTION OF THE INVENTION

Hereinafter, embodiments of the present invention will be described with reference to the accompanying drawings.

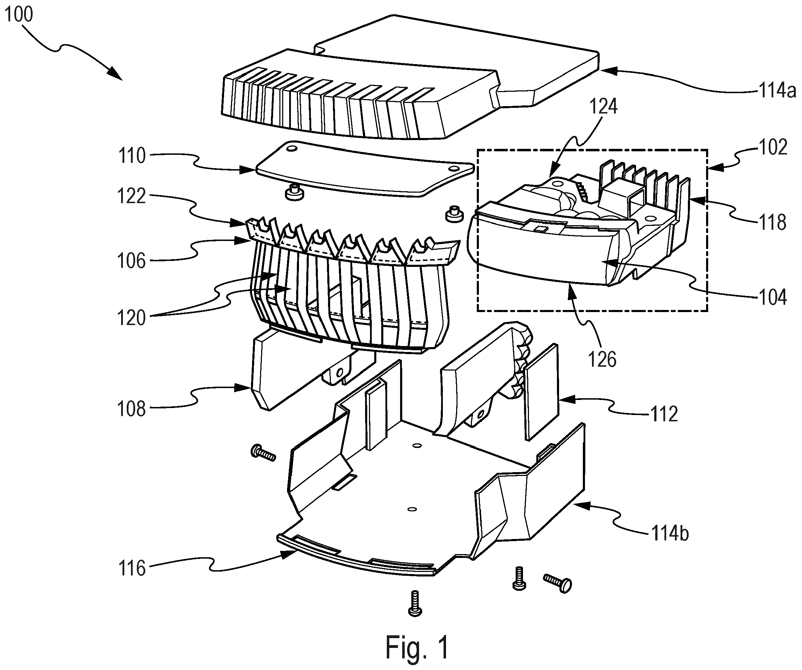

Figure 1 shows an exploded view of an indicating and/or lighting device 100, according to an embodiment of the present invention. The indicating and/or lighting device 100 for a motor vehicle comprises a lighting module 102 having a main light source 104, a reflector 124, and an outer lens 126. The main light source 104 may be configured to emit a main light beam in a main direction. The main direction maybe a direction of the main light beam to illuminate a path ahead of the motor vehicle.

The device 100 comprises a front light guide 106 comprising two main surfaces 120 separated by edges 122, the front light guide 106 and its main surfaces 120 being arranged in front of the lighting module 102 and transversally to the main direction. The device 100 comprises a side light guide 108 arranged at a side of the lighting module 102 including top and bottom.

The device 100 comprises a first Printed Circuit Board (PCB) 110 attached near to an input portion of the front light guide 106. The first PCB 110 comprises a first auxiliary light source (not shown in Figure). The device 100 comprises a second PCB 112 attached near to an input portion of the side light guide 108. The second PCB 112 comprises a second auxiliary light source (not shown in Figure).

As illustrated, the device 100 can comprise a container containing the lighting module 102, the front light guide 106 forming a front wall of the container, the side light guide 108 forming a side wall of the container.

Here, the lighting module 102 further comprises a heat sink 118 at a posterior end of the lighting module 102, said heatsink rising out of the container and at the rear of the container.

In this example, the front light guide 106 and the side light guide 108 are positioned such that the light transmitted from the front light guide 106 does not mix with the light transmitted from the side light guide 108. The container comprises a housing, wherein the housing includes a top cap 114a and a bottom cap 114b, forming respectively a top wall and a bottom wall of the container. The bottom cap 114b can comprise a recess 116 wherein the front light guide 106 is adapted to be attached vertically to the recess 116 at the bottom cap 114b.

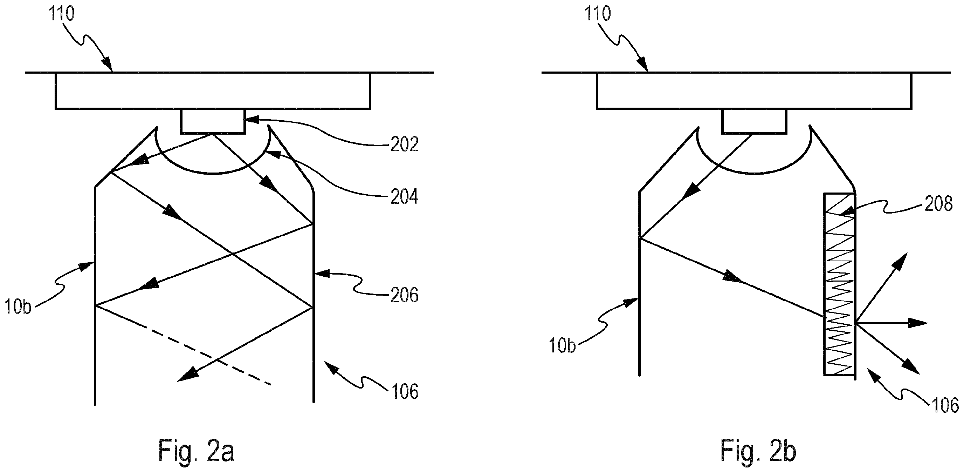

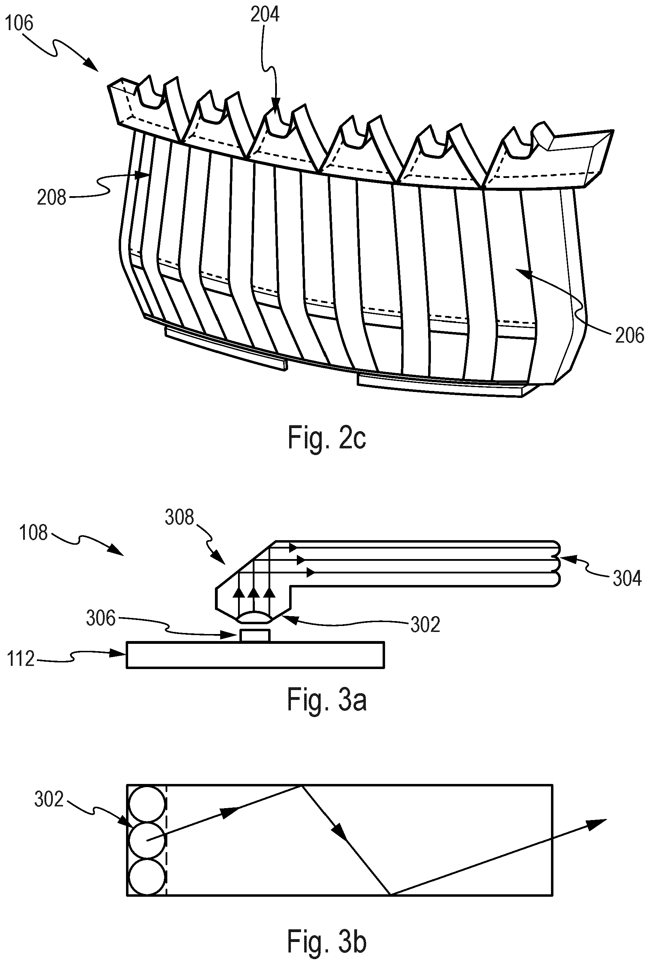

The working of the front light guide 106 is explained with respect to Fig. 2.

Fig. 2c shows an arrangement of smooth surface portion 206 and an irregular portion 208 on the front light guide 106, according to an embodiment of the present invention.

Figure 2a shows path of light rays in the front light guide 106 with smooth surface portion, according to an embodiment of the present invention. Figure 2a is a schematic view of a section made transversely to the main light guide at a smooth surface portion.

The light rays are generated by a first auxiliary light source 202 mounted on the first PCB 110. The first PCB 110 having the first auxiliary light source 202 may be arranged in proximity to an incoupling portion 204 of the front light guide 106. In an embodiment, the incoupling portion 204 comprise a collimator, a lens, a mirror, any optical device or arrangement, and the like that enables parallelization of first auxiliary light beam from the first auxiliary light source 202.

The front light guide 106 and the first PCB 110 are aligned such that the light generated by the first auxiliary light source 202 may enter the front light guide 106 through the incoupling portion 204.

The front light guide 106 may comprise the main surface 120 that comprises the smooth surface portion 206. The light rays from the first light source 202 that may enter the front light guide 106 through the incoupling portion 204 may undergo total internal reflection in the smooth surface portion 206. Therefore, the smooth surface portion 206 ensures that the light rays are reflected and does not exit until it contacts a roughness portion 208 as explained in Fig. 2b.

Figure 2b is a schematic view of a section made transversely to the main light guide at an irregular portion. Figure 2b shows path of light rays in the front light guide 106 with irregular portion, according to an embodiment of the present invention. As can be seen from the figure 2b, the front light guide 106 comprises an irregular portion 208 present at an edge of the front light guide 106. The irregular portion 208 may be covered by plurality of roughnesses with at least one pattern. The roughnesses of the irregular portion 208 may be non-uniform and uneven. In an embodiment, the roughnesses of the irregular portion 208 may be uniform and even. The light rays emitted by the first auxiliary light source 202 may enter the front light guide 106 through the incoupling portion 204. Subsequently, the light rays may be reflected by the smooth surface portion 206 until it contacts one of the roughnesses of the irregular portion 208. Consequently, the light rays exit out of the front light guide 106 after contacting the irregular portion 208.

The front light guide 106 comprises the smooth surface portion 206 and the irregular portion 208 arranged alternatively such that a pattern may be formed as shown in Fig. 2c. The smooth surfaces portions 206 and the irregular portions 208 forms respectively transparent stripes and translucent stripes. In an embodiment, the incoupling portion 204, the smooth surface portion 206, and the irregular portion 208 of the front light guide 106 may be constructed of a single piece component. In an embodiment, the portions 206, 208 may be arranged in such a way that the main beam goes at least partly out of said device through the main surfaces 120 in such a way that it forms a lighting or a signalling function. In an embodiment, the portions 206, 208 may be alternatively arranged on the front light guide 106 such that an alternance of transparent stripes and translucent stripes is formed on the front light guide 106. The alternance may enable the indicating and/or lighting device of the motor vehicle to perform various lighting function such as signature lighting, indicating, welcome scenario and/or the like.

Figure 3a shows a schematic top view of the side light guide 108, according to an embodiment of the present invention. The side light guide 108 is a flat light guide comprising a light incoupling portion 302, and an irregular light output portion 304 covered by plurality of roughness. In an embodiment, the incoupling portion 302 may comprise a collimator, a lens, a mirror, any optical device or arrangement, and the like that enables parallelization of a second auxiliary light beam. The second auxiliary light beam is generated by a second auxiliary light source 306 mounted on the second PCB 112. The side light guide 108 and the second auxiliary light source 306 are arranged such that the light emitted by the second auxiliary light source 306 enters into the side light guide 108 through the incoupling portion 302. The light rays entering the side light guide 108 are made uniform by the incoupling portion 302.

Subsequently, in the illustrated example, the light rays are reflected by a reflecting portion 308 of the side light guide 108 such that direction of the incoming light rays are changed towards irregular light output portion 304 of the side light guide 108. The light rays propagates along the side light guide 108 by total internal reflections until it contacts one of the roughnesses of the irregular light output portion 304 and consequently exit out of the side light guide 108. In an embodiment, the reflecting portion 308 of the side light guide 108 may be a planar surface arranged at an angle of approximately 45 degrees such that the light rays reflected by the reflecting portion 308 are perpendicular to the light rays entering the side light guide 108.

Figure 3b shows a side view of the side light guide 108, according to an embodiment of the present invention. As can be seen from the figure, the light rays entering the side light guide 108 via the incoupling portion 302 propagates along the side light guide 108 by total internal reflection.

In an embodiment, the front light guide 106 and the side light guide 108 may be made of a transparent or translucent material. In an embodiment, the material used may for example comprise polycarbonate (PC) or polymethylmethacrylate (PMMA), fibre, or glass.

In an embodiment, the main light source 104, may comprise one or several solid state lighting element such as a light emitting diode (LED) cooperating with optics to form the main light beam.

In the illustrated example, the optics comprise reflectors 124 reflecting the light rays emitted from the LEDs towards an optical lens 126, which finally shaped the rays into the main light beam.

The first auxiliary light source 202, and the second auxiliary light source 306 may be a solid state lighting element such as a light emitting diode (LED). In an embodiment, the main light source 104, the first auxiliary light source 202, and the second auxiliary light source 306 may comprise one or more LEDs.

In an example embodiment, the first auxiliary light source 202, and the second auxiliary light source 306 may comprise a LED combination of white and amber colors. In an embodiment, the color of the LEDs present in the main light source 104, the first auxiliary light source 202, and the second auxiliary light source 306 maybe changed based on regulatory requirements.

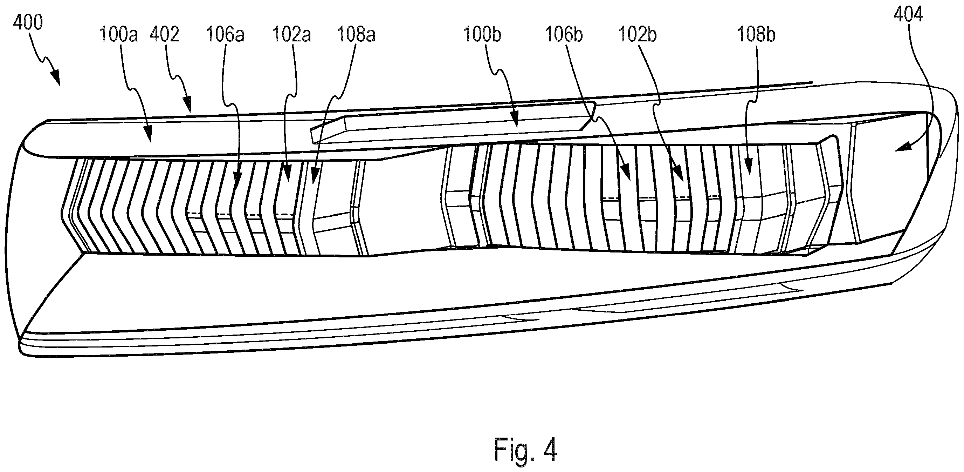

Figure 4 shows the indicating and or lighting device 100 fixed on an automotive vehicle, according to an embodiment of the present invention. In an embodiment, a vehicle lighting apparatus 400, such as a headlamp, a front lighting bar, a rear lamp, and the like may comprise a housing 402 closed by an outer lens 404.

The outer lens 404 may be designed to be a part of the exterior surface of a vehicle. The housing 402 may include the device 100. The said device 100 and said outer lens 404 may be arranged such that the light it emits goes out of the said apparatus through said outer lens 404 and said patterns are visible through said outer lens 404.

In an embodiment, one or more lighting and/or indicating devices 100a, 100b maybe integrated and utilized in the headlamp for the automotive vehicle. The headlamp of the automotive vehicle comprises the housing 402 closed by the outer lens 404.

The device 100a comprises a front light guide 106a arranged in front of the lighting module 102a that emits the main light beam. The device 100a comprises a side light guide 108a arranged at a side of the lighting module 102a. The device 100a and the outer lens 404 being arranged such that the light it emits goes out of the said headlamp through said outer lens 404 and the patterns formed by the front light guide 106a and the side light guide 108a are visible through the said outer lens 404.

In the illustrated headlamp, two lighting and indicating devices 100a, 100b are arranged in the housing 402 of the headlamp. Here after first device 100a and second device 100b.

Similarly to first device 100a, the second device 100b comprises front light guide 106b arranged in front of the lighting module 102b that emits the main light beam of the second device 100b. The device 100b comprises side light guide 108b arranged at a side of the lighting module 102b.

In an embodiment, the lighting module 102a of the first device 100a may be utilized to perform a low beam function and the lighting module 102b of the second device 100b may be utilized to perform a high beam function of the automotive vehicle. In an embodiment, the first auxiliary light source 202 may be turned-OFF when the main light source 104 of the lighting module 102 of the first device 100a is turned-ON. When the lighting modules 102a and 102b of both devices 100a and 100b are turned-ON, the each front light guide 106a and 106b performs the function of a transparent screen and allows the respective main light beam to pass through it. Therefore, the main light beams do not undergo total internal reflection in the front light guides 106a and 106b when the main light sources 104 are turned-ON.

In an embodiment, such as the one illustrated in figure 1 to 3b, the first auxiliary light source 202 may be turned-ON when the main light source 104 of the lighting module 102 is turned-OFF. When the first auxiliary light source 202 is turned-ON, the light emitted from the first auxiliary light source 202 propagates through the front light guide 106 by total internal reflections until it contacts one of the roughness of the irregular portion and consequently exit out of the front light guide 106a and 106b. Thus, the device 100 maybe used in the automotive vehicle for signature lighting, welcome scenarios and the like.

In an embodiment, the device 100 maybe used to perform indicating or signaling function in addition to the above mentioned lighting functions. The side light guide 108 enables the device 100 to perform the indicating function and the main lighting function simultaneously. In an embodiment, the front light guide 106 and the side light guide 108 are positioned such that the light transmitted from the front light guide 106 does not mix with the light transmitted from the side light guide 108. Therefore, the second auxiliary light source may be turned -ON when the main light source 104 of the lighting module 102 is turned-ON and be distinctly visible through the side light guide 108a. For example, a driver may utilize the device 100 to provide a turn indicating function when the main light source is turned-ON. Thus, in addition to illuminating a road, the side light guide 108 enables the device 100 to perform an indicating function when the driver is driving the automotive vehicle.

In an embodiment, such as the one illustrated in figure 4, the first device 100a and the second device 100b may be utilized by the automotive vehicle such that an indicating function and a lighting function may be performed alternatively by the device 100a and 100b. For example, the main light source and the second auxiliary light source of the first device 100a may be turned-ON and the first auxiliary light source of the first device 100a may be turned OFF. Simultaneously, the first auxiliary light source 106b and the second auxiliary light source of the second device 100b may be turned-ON. Therefore, in this scenario, the illuminating function and the indicating function may be performed by the first device 100a in which the front light guide 106a performs function of a transparent screen and allows the main light beam to run through it, whereas the side light guide 108a performs total internal reflection of the light emitted from the second auxiliary light source thereby performing the indicating function. Additionally, the second device 100b may perform only the indicating function by utilizing the corresponding front light guide 106b and the corresponding side light guide 108b. The light rays from the first auxiliary light source of the second device 102b may undergo total internal reflections in the corresponding front light guide 106b thereby forming a pattern of light output. Similarly, the light rays from the corresponding second auxiliary light source may undergo total internal reflection in the side light guide 108b of the second device 100b thereby performing indicating function.

Therefore, the integrated indicating and or lighting function of the device 100 ensures the device 100 can be standardized across different variants and types of automotive vehicle without the need to make any changes to the outer lens of the automotive vehicle.

Further, space requirements in a headlamp is reduced as there is no need for a separate indicating or signalling device in the headlamp. Moreover, the device 100 can be used either as a standalone headlamp or integrated with one or more devices 100 to perform a combination of various lighting functions such as daytime running light, turn signal indicating function, position lamp, illumination, signalling, welcome scenario, signature lighting and the like.

Also, the auxiliary light source(s) including the first auxiliary light source 202, and the second auxiliary light source 306 can be lit for generating a daytime running light and the main light beam(s) can be a road lighting function or part of a road lighting function, such as a low beam or a high beam. This enable to give to the device(s) and more particularly to the headlamp containing it(them) a common lit aspect during day and during night.

Although the present disclosure provides references to figures, all embodiments shown in the figures are intended to explain preferred embodiments of the present invention by way of example rather than being intended to limit the present invention. Preferred embodiments of the present invention have been disclosed. However, it should be apparent to a person of ordinary skill in the art that certain modifications would come within the teachings of this invention and that various changes or modifications may be made in the present disclosure without departing from the principles and spirit of the disclosure, which are intended to be covered by the present invention as long as these changes or modifications fall within the scope defined in the claims and their equivalents

## Claims

1. An indicating and/or lighting device (100) for a motor vehicle, the device comprising:
a lighting module (102) having a main light source (104) and emitting a main light beam in a main direction;
a front light guide (106) that is a flat light guide comprising two main surfaces (120) separated by edges (122), the front light guide (106) and its main surfaces (120) being arranged in front of the lighting module (102) and transversally to the main direction, wherein the front light guide (106) is substantially made of a transparent material and wherein at least one of the said main surfaces (120) comprises smooth surfaces portions (206) and irregular portions (208) covered by plurality of roughnesses with at least one pattern, the portions being arranged in such a way that the main beam goes at least partly out of said device (100) through said main surfaces (120) in such a way that it forms a lighting or a signalling function; and
at least one side light guide ((108) is provided and arranged at a side of the lighting module (102) including top and bottom, wherein the side light guide ((108) is arranged such that the light transmitted from the side light guide ((108) is different from the light transmitted from the front light guide (106).

2. The device (100) according to claim 1, wherein the front light guide (106) comprises a light incoupling portion (204), said device comprising a first auxiliary light source (202), said front light guide (106) and said first auxiliary light source (202) being arranged such that the light emitted by said first auxiliary light source (202) enters into the front light guide (106) through the incoupling portion (204) and propagates along the front light guide (106) by total internal reflexions until it contacts one of the roughnesses (208) and consequently exit out of the front light guide (106).

3. The device (100) according to claim 1 or 2,wherein the side light guide (108) is a flat light guide comprising a light incoupling portion (302), and an irregular light output portion (304) covered by plurality of roughness, said device comprising a second auxiliary light source (306), said side light guide (108) and said second auxiliary light source (306) being arranged such that the light emitted by said second auxiliary light source (306) enters into the side light guide (108) through the incoupling portion (302) and propagates along the side light guide (108) by total internal reflections until it contacts one of the roughnesses (304) and consequently exit out of the side light guide (108).

4. The device (108) according to any of claim 1 to 3, wherein the device (100) comprises a container containing the lighting module (102), the front light guide (106) forming a front wall of the container.

5. The device (100) according to claim 4, wherein the container comprises a housing, wherein the housing includes a top cap (114a) and a bottom cap (114b), forming respectively a top wall and a bottom wall of the container.

6. The device (100) according to claim 5, wherein the front light guide (106) is adapted to be attached vertically to a recess (116) at the bottom cap (114b).

7. The device (100) according to claim 4 combined with any of claim 5 to 6, wherein the side light guide (108) form a side wall of the container.

8. The device (100) according to any of claims 5 to 7, wherein the lighting module (102) further comprises a heat sink (118) at a posterior end of the lighting module (102), said heatsink (118) rising out of the container and at the rear of the container.

9. The device (100) according to any of claims 1 to 8, wherein the smooth surfaces portions (206) and the irregular portions (208) forms respectively transparent stripes and translucent stripes, said portions being arranged on the front light guide (106) as an alternance of transparent stripes and translucent stripes.

10. The device (100) according to claim 4 and 9, wherein the side light guide (108) is arranged such that its light emitting edge has the same shape as the closest of said translucent portions.

11. The device (100) according to claim 1, wherein the front light guide (106) and the side light guide (108) are positioned such that the light transmitted from the front light guide (106) does not mix with the light transmitted from the side light guide (108).

12. A vehicle lighting apparatus (400), such as a headlamp, a front lighting bar, a rear lamp, comprising a housing (402) closed by an outer lens (404), said outer lens (404) designed to be a part of the exterior surface of a vehicle, said housing including a device (100) according to any of claims 1 to 11, the said device (100) and said outer lens (404) being arranged such that the light it emits goes out of the said apparatus (400) through said outer lens (404) and said patterns are visible through said outer lens (404).
